# EUROPEAN PATENT APPLICATION

(11) **EP 1 722 204 A1**
(43) Date of publication of application: **15.11.2006**
(21) Application number: 05425319.0
(22) Date of filing: 13.05.2005
(51) Int. Cl.: G01F 23/292, A47J 31/56, G01N 21/41

(54) **Optical device for detecting a liquid level in an infusion machine, related apparatus and method**

(71) Applicant: RANCILIO MACCHINE PER CAFFE' S.p.A., I-20010 Villastanza di Parabiago (Milano) (IT)
(72) Inventor: Carbonini, Carlo, repub.no.40 20010Villastanza di Parabiag (IT)
(74) Representative: Robba, Eugenio

(57) **Abstract**

The present invention relates to an optical device for detecting the liquid level in an infusion machine having a boiler (68) and a duct (61) of a determined length. The device (12) comprises an optical sensor (21) associated to the duct in a determined position representative of a determined level of the liquid in the boiler (68). The sensor (21) is arranged to detect the presence or the absence of the liquid at the determined level by means of optical signals. The device (12) further comprises a board (23) connected to the optical sensor (21) and apt to manage the sensor (21) signals and to generate electrical signals representative of the presence or of the absence of the liquid in the determined level. The device (12) comprises a shell (27) opaque to the ambient light and shaped so as to engage the board (23) and protect the optical sensor (21) from the ambient light. The invention also relates to the apparatus for infusion machine that uses the device and to the related detecting method.

## Description

### Technical field

The present invention relates, in general, to an optical device for detecting the liquid level in a boiler of an infusion machine, to a related apparatus that comprises the device according to the invention and to a method for detecting the liquid level.
In particular, the present invention relates to an optical device for detecting a determined level of a liquid, for instance water, in a boiler of an automatic machine for preparing espresso coffee.

### Background art

Automatic machines are known for preparing coffee and detector devices (detectors) are known that are visible from the outside of the machine itself and allow both to detect the liquid level and to restore the level when said level falls under a detection threshold determined, for instance, on the basis of the position of the detector itself.
In particular, it is known that automatic machines usually comprise a boiler hidden from sight in which the water for the preparation of infusions is heated and an external visualisation duct (sight duct or glass gauge), typically transparent, connected to the boiler through communicating vessels and arranged to visualise the liquid level in the boiler itself.

It is also known, for instance from publication EP_1255478 filed in the name of the Applicant, to associate detector devices, for instance of capacitive type, to the sight ducts. Such known devices are manually adjustable in height so that they can be used for commanding, in case of lowering of the liquid under the level adjusted in height, the refilling of the liquid in the boiler to the adjusted height.

A typical problem of capacitive-type devices is that, in the case of liquids having features of very poor electrical conductivity or of particular purity, such devices are substantially ineffective and therefore inapplicable.

In order to solve the problems encountered with the use of capacitive detectors, optical type detectors (optical devices) have been introduced in which it is generally provided that predetermined areas of the sight duct are interposed between at least one light signal emitter and a signal detector.
An optical device associated to an external visualisation duct is known, for instance, from the publication JP_2004-069482.
Such a known device, in addition to solving the above-identified problems related to capacitive detectors, tries to solve a general problem of optical devices, that is their tendency to measuring errors due to the very high sensitivity of the signal detector to external light.
In the known document, in order to solve this last problem, an optical device is proposed which is fixedly connected to the duct in predetermined positions and comprises one or a pair of optical emitters and detectors configured so that the light is emitted by the emitter at predetermined time intervals and that a possible reception thereof is verified by the signal detector, only at the predetermined time intervals of emission.

The Applicant finds that the known solution involves, however, some problems. First of all, the known solution does not solve the problem of possible dirt or humidity accumulation on the external surface of the sight duct.
Moreover, the device of the known solution, as disclosed, seems very complex and, yet, provided for determining and regulating only a predetermined fixed liquid level in the boiler.

In the field of beverage machines an optical device is also known from publication DE_10201768 adapted to detect the presence of liquids or solid substances in a container. In the known document it is suggested to apply the optical device to the container, in a fixed position.
In order to solve the problem of the high sensitivity of the signal detector to external light, the known document proposes either to use specific frequencies, for instance frequencies in the ultraviolet field, or, with some similarity to the cited publication JP_2004-069482, to intermittently activate the emitter.

In synthesis, the Applicant finds that the background art does not teach how to apply in a simple and effective way optical devices to external visualisation ducts of infusion machines and to avoid, at the same time, not only the problem of the sensitivity of the detector to ambient light, but also the problem connected to the dirt and humidity that tend to accumulate on such elements of the infusion machines.

Moreover, the Applicant finds that the background art does not suggest any device that, besides solving in a simple and effective way the above problems, allows to dynamically vary the liquid level in the boiler.

### Disclosure of the invention

Object of the present invention is, in particular, an optical device adapted to solve, in an effective and simple way, the above-described problems of the background art.

This object is achieved by means of an optical device for determining the liquid level in an infusion machine as claimed.

The present invention also relates to an apparatus comprising at least one optical device according to the invention, as well as to a method for determining the liquid level in an infusion machine.

The Claims are an integral part of the teaching of the present invention.

According to a preferred embodiment the optical device comprises a shell opaque to light and adapted to protect from ambient light the optical device itself, placed along a duct of the infusion machine.

According to a further feature of the present invention, the device comprises an electronic board having associated supports appropriately shaped for co-operating with the shell in order to exert a determined pressure on the duct and to allow a free positioning along the duct itself.

According to another feature of the present invention, the electronic board is adapted to distinguish the progressive change from full load to empty and from empty to full load of the liquid level in the duct and to generate diversified signals, depending on the type of detected progressive change, in order to restore the liquid in the infusion machine.

### Brief description of Drawings

These and further features and advantages of the present invention will appear more clearly from the following detailed description of a preferred embodiment, provided by way of non limiting example with reference to the attached figures, wherein components designated by same or similar reference numerals indicate components having same or similar functionality and construction and wherein:
Fig. 1 shows a draft of an apparatus for infusion machine that comprises the device according to the invention;
Fig. 2 is a cross-section taken along line I-I of the device of Fig.1 in which a condition of liquid absence is shown;
Fig. 3 is a cross-section taken along line I-I of the device of Fig. 1 in which a condition of liquid presence is shown;
Fig. 4 is a perspective view of a device according to the invention applied to a sight duct.

### Best mode of carrying out the invention

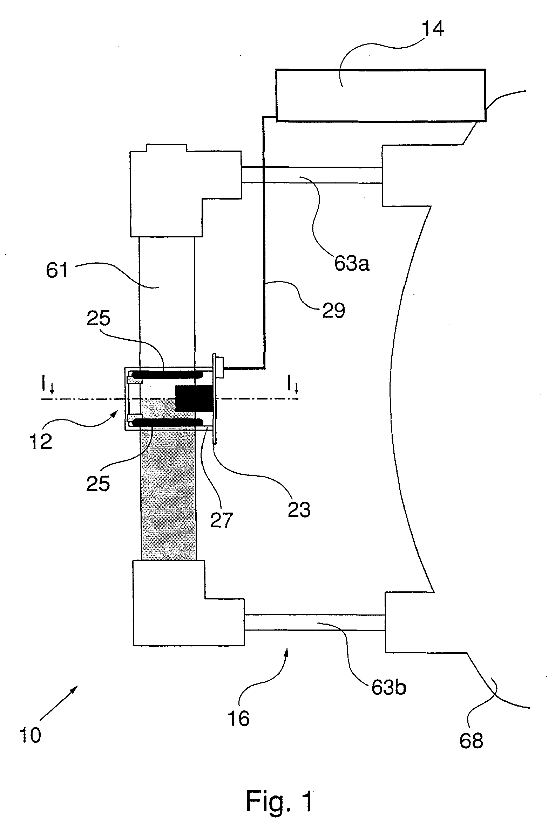

With reference to the Figure 1 an apparatus 10 for the detection and/or control of the presence of liquids, for instance for an infusion machine, comprises an optical detection device (optical device) 12, a boiler unit 16, and, for instance, a control device 14, of known type, arranged to control the liquid level in the boiler unit 16.

The boiler unit 16, in the preferred embodiment, comprises a boiler 68, known per se, arranged to contain a liquid, for instance water generally under pressure to be used for preparing infusions, and a sight duct (level tube) 61, of known type, of transparent material, for instance glass, Teflon or other plastic material; the level tube, preferably of cylindrical shape, has a first end connected through a first duct 63a to a first fitting placed in an upper position of the boiler 68 and a second end connected through a second duct 63b to a second fitting placed in a lower position of the boiler 68.
The boiler unit 16 further comprises one or more pumps, not shown in the figures, adapted to fill up and/or to empty the boiler 68 under the control, for instance, of the control device 14.
The level tube 61, of known type, is arranged to make visible from the outside the liquid level present in the boiler 68.

The control device 14, for instance a control device of known type for controlling pumps, is connected to the optical detection device 12, for instance through a connection cable 29, and is arranged to control, in a known way, on the basis of signals coming from the optical detection device 12 and by means of the pumps, the filling and emptying of the boiler 68.

The optical detection device (device) 12 comprises, in the preferred embodiment, a board or card 23, an optical sensor (sensor) 21 electrically connected to the board 23 and arranged to exchange electrical signals with the board itself, and a cover (shell) 27 made of a material opaque to light.

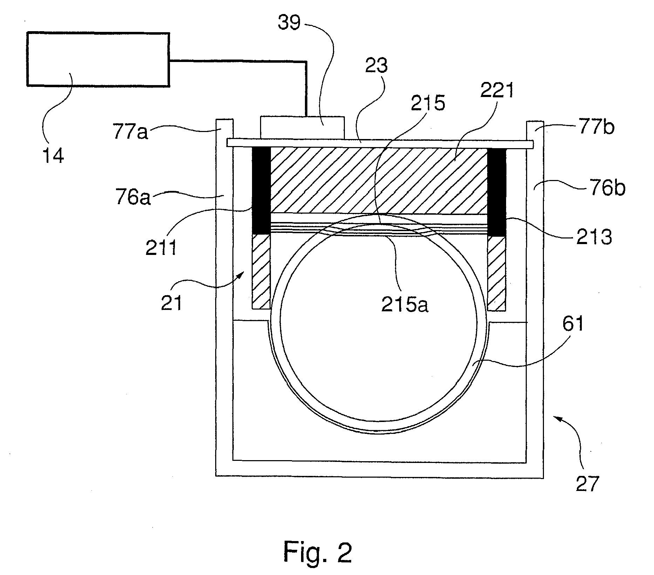

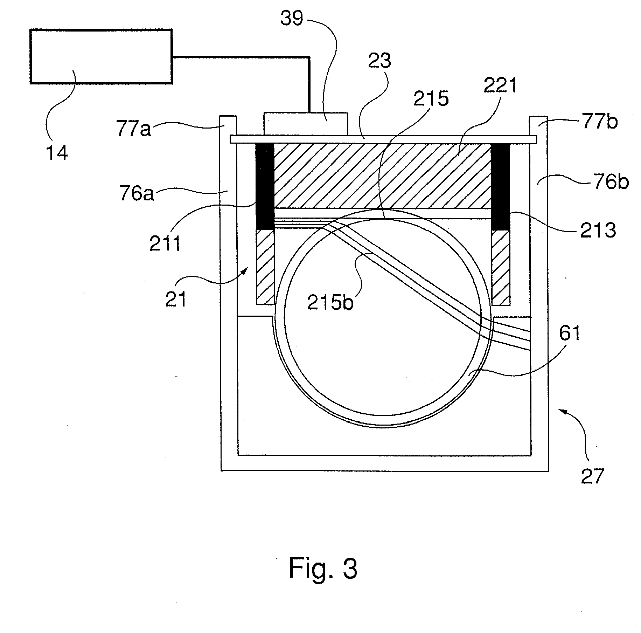

The optical sensor 21, for instance a photoelectric sensor of known type, comprises, in the preferred embodiment, a light signal emitter (emitter) 211 (Fig.1, Fig.2 and Fig.3) and a light signal receiver (receiver) 213, both known per se, and is configured so that the emitter 211 is opposed to the receiver 213 according to a line of sight 215, parallel to a determined diameter of the level tube (tube) 61 and intersecting at least partially the tube 61 itself.
In particular, the optical sensor 21 is configured so that the light signals emitted from the emitter 211 are incident at an angle different from 90° on the surface of the tube 61 and on the liquid possibly present in same tube 61.
In such a type of configuration, as known, on the basis of the known Snell's second law, the light signals are refracted in a different way which is dependent on the different material crossed, as for instance glass and air or glass and water.

For instance, in case of water absence in the tube 61, the light signal generated by the emitter 211 crosses the walls of the tube 61 and undergoes a small variation of trajectory 215a, which, however, is of little importance; as a consequence the light signal is intercepted by the receiver 213 that can thus generate and transmit a corresponding electrical signal to the board 23.

In case of water presence in the tube 61, the light signal generated by the emitter 211 crosses the walls of the tube 61 as well as the water contained in the tube, and undergoes a remarkable variation of trajectory 215b; as a consequence the light signal is considerably divergent from the line of sight 215, which is parallel to the duct diameter, whereby the light signal is not intercepted by the receiver 213 and, preferably, no electrical signal is generated and transmitted to the board 23.

In the preferred embodiment, the emitter 211 and the receiver 213 are associated to a support 221, for instance a "U" shaped support welded (fixed) to the board 23, arranged to co-operate with the cover 27, as it will be disclosed later in detail, in order to clamp with a moderate pressure the tube 61 and to allow that the optical device 12 be freely placed in whathever position along the tube 61.
The support 221, for instance, can be made of a plastic material adapted to exert a determined friction pressure on the tube 61.

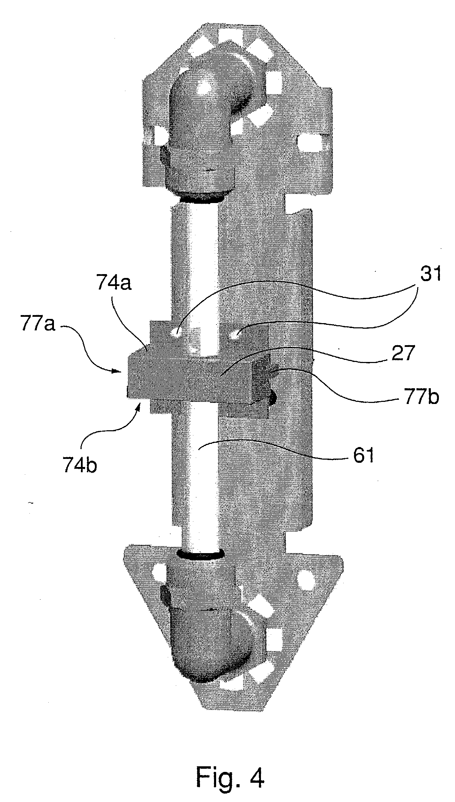

The board 23, for instance an electronic board, comprises, in the preferred embodiment, a signal processing circuit adapted to electrically supply the optical sensor 21 and to control the operation thereof, as it will be disclosed later in detail, a plurality of light signal pointers 31 (Fig.1, Fig.2, Fig.4), for instance LEDs (Light Emitting Diodes), arranged to visually indicate, for instance, predetermined conditions of operation of the apparatus 10 or of the device 12, and an electrical connector 39, known per se, shaped for connecting the board 23 to the control device 14 through the connection cable 29.
The board 23 further comprises, preferably, a pair of sockets or recesses, obtained, for instance, in middle position and on opposite sides of the board 23, and adapted to house, as it will be disclosed later in detail, the shell 27.
Obviously, in others embodiments, there can be, for instance, more than two recesses or recesses obtained in other positions of the board, without departing from the scope of the disclosure.
In particular, the signal processing circuit (circuit) of the board 23 is configured to carry out, for instance, one or more of the following functions:
- to capture the signal detected by the receiver 213, for instance a voltage signal, but in others embodiments, it could be a current signal, to amplify it so as to make it easily usable, and to transmit it to the control device 14 through the cable 29;
- to introduce, for instance, two distinguished reading thresholds of the signal detected by the receiver 213, alternatively valid for the cases of rising signal (first threshold) and falling signal (second threshold); the introduction of two thresholds, allows, for instance, to introduce, respectively, a first and a second hysteresis in the response of the device 12; such an introduction, therefore, allows to differently manage the falling and rising signals, wherein, however the optical signal is very close to ("grazes") the fluid surface and therefore the receiver 213 receives an uncertain signal. In such two cases, as a matter of fact, in the presence of an uncertain signal it is possible, by using two thresholds and two hysteresis, to apply differentiated strategies, for the management of the uncertain signal;
- to render the operation of optical sensor 21 intermittent so as to considerably lengthen the life of the sensor 21 itself. Indeed, as known, photoelectric sensors are subject, with the increasing hours of use, to a loss of performances and therefore, the introduction of a determined level of intermittent operation allows to lengthen the life of the photoelectric sensors and of the devices using the sensors. Obviously, the employed level of intermittence needs, preferably, to be correlated with the response times of the associated control device 14 that supervises the filling and emptying of the boiler 68 of the boiler unit 16. Such times can be, for instance, 1 second "power on" and 2 seconds "power off" for the optical sensor 21.

The shell 27, for instance of opaque plastic material, comprises, in the preferred embodiment, a body 75, substantially shaped as a hollow parallelepiped, having, for instance, four lateral faces, a front face and an inner recess conformed to the shape of the level tube 61.
In the exemplary embodiment, two opposed lateral faces, 76a and 76b, comprise respective tabs, 77a and 77b, located at the middle end edge of the faces, 76a and 76b, and shaped so as to engage, in a known way, the pair of sockets of the board 23. The remaining lateral faces, 74a and 74b, are shaped so as to respectively comprise a recess adapted to accommodate the level tube 61.
In use, the shell 27 is engaged, for instance by a snap-in engagement, to the board 23 through the tabs 77a and 77b and is adapted to exert, through the inner recess and the lateral faces 74a and 74b, a determined pressure on the level tube 61 and the board 23 itself, so that the support 221 and the shell 27, co-operating with each other, are arranged to ensure the free positioning of the device 12 in whatever position along the tube 61.
Moreover, thanks to such a configuration the cover or shell 27 is arranged to protect the optical sensor 21 from any interference on the light signal detection due to ambient light.

In other embodiments, not shown in the figures, the support 221 can be replaced by a second shell to be placed opposed to the shell 27, and shaped so as to contain the board 23 and to be engaged, for instance by a snap-in engagement, with the shell 27 so as to co-operate with the shell 27 in order to ensure both the free positioning of the device 12 in whatever position along the tube 61 and the protection of the optical sensor 21 from any interference on the light signal detection due to ambient light.

Still in other embodiments the shell 27 can comprise, for instance on its frontal face, an opening arranged to allow to visualise the liquid level in the tube 61. Obviously, still in further embodiments, a floating element, arranged to render visible from the outside the liquid level in the tube 61 can be provided inside the level tube 61.

In further embodiments, two gaskets 25, for instance gaskets of annular shape, can be associated to the cover 27, and mounted around the duct before assembling the duct with the boiler unit 16; the gaskets can be shaped so as to be comprised between the faces 74a and 74b of the cover 27 and those of the support 221.
In such an embodiment the gaskets 25 co-operate with the cover 27 in order to seal the area in which the optical sensor 21 is operative and in order to prevent that water vapour (steam), condensation and powder compromise the operation of the optical sensor 21.

The operation of the optical device as described above is the following.

Taking as reference a rest condition or step in which the liquid is present in the boiler 68 and has a level higher than the position of the optical sensor 21; in such a step the light signal emitted by the emitter 211 is not intercepted by the receiver 213 and the signal processing circuit, for instance, does not transmit any signal to the control device 14.

In a second step, following for instance the use of the liquid for the preparation of infusions, the liquid level drops to a level equivalent to or slightly lower than the position the optical sensor 21; in such a situation or step the light signal emitted by the emitter 211 is partially intercepted by the receiver 213.
The signal processing circuit, in such a situation, interprets the signal presence as the first detection threshold to be associated, for instance, to the first type of hysteresis in the processing of the received signal and, for instance, it does not transmit any signal to the control device 14.
Such a solution is applicable, for instance, when the boiler filling pumps are of the fast-activation type or where no long periods of non-operation of the pumps themselves, are preferred.

In a third step, always following the use of the liquid for the preparation of infusions, the level of the liquid drops to a level lower than the position of the optical sensor 21; in such a situation or step the light signal emitted by the emitter 211 is for the most part intercepted by the receiver 213.
The signal processing circuit, in such a situation, interprets the presence of the signal as a status of completion of the first type of hysteresis and, for instance, transmits to the control device 14 signals adapted to allow the activation, through the control device 14 itself, of the filling pumps of the boiler 68.

In a fourth step, for instance following the progressive filling of the boiler 68 by effect of the activity of the pumps, the liquid level rises to a level slightly lower than or equivalent to the position of the optical sensor 21, in such a situation or step the light signal emitted by the emitter 211 is partially intercepted by the receiver 213.
The signal processing circuit, in such a situation, interprets the signal presence as the second detection threshold to be associated, for instance, to the second type of hysteresis in the processing of the received signal and, for instance, maintains operative the signal transmitted to the control device 14 for maintaining activated the filling pumps.
Of course, such a solution, obviously, is applicable when, for instance, long activation periods of the pumps are preferred, separated, for instance, by equally long periods of non-operation of the pumps themselves.

In a fifth step, the liquid in the tube 61 exceeds the positioning level of the optical sensor 21; in such a step the light signal emitted by the emitter 211 is no longer intercepted by the receiver 213 and the signal processing circuit, for instance, does not transmit any signal to the control device 14, which, therefore, deactivates the operation of the pumps and maintains the pumps deactivated in a way equivalent to the above described rest condition or step.

Advantageously, during all the operation steps, the presence of the shell 27 ensures a reliable detection of the optical signals.

Moreover, the shell structure as described allows also, for instance, to move the optical device 12 along the tube 61 and thus to modify the filling level of the boiler 68, since the operation is substantially independent from the position of the optical device.

In the present description the water has been considered as reference liquid, but, as is easily comprehensible to a technician in the field, the liquid present in the boiler can be a any liquid usable in an infusion machine.

Obvious changes and variations are possible to the above disclosure, as regards dimensions, shapes, materials, components, circuit elements, connections and contacts, as well as details of circuitry, the described construction and operation method without departing from the scope of the invention as defined by the claims that follow.

## Claims

1. Optical device for detecting the presence of a liquid in a boiler (68) of an infusion machine having a sight duct (61) of a determined length, comprising
- an optical sensor (21) associated to said duct in a determined position representative of a determined liquid level in the boiler (68), and arranged to detect through optical signals the presence or the absence of the liquid in said determined level;
- a board (23) connected to said optical sensor (21) and adapted to manage said optical signals and to generate electrical signals representative of the presence or of the absence of the liquid in the determined level;
**characterised by**
- a shell (27) opaque to ambient light and shaped so as to engage said board (23) and protect said optical sensor (21) from ambient light.

2. Device according to claim 1, **characterised by**
- a support element (221) associated to said board (23) and shaped so as to co-operate with said shell (27) in order to exert a determined pressure on said duct (61) and to allow a free positioning of said optical sensor (21) along said determined length of said duct (61).

3. Device according to claim 2, **characterised in that** said support element is shaped as a "U" shaped support (221) fixed to said board and comprising said optical sensor (21).

4. Device according to claim 3, **characterised in that** said shell (27) comprises
- at least two lateral faces (74a, 74b) having respective recesses adapted to partially accommodate said at least one duct (61); and **in that** the device comprises
- a pair of annular gaskets (25) interposed, inside said shell (27), between each of said two lateral faces (74a, 74b) and respective lateral faces of said "U" shaped support (221).

5. Device according to claim 2, **characterised in that** said support element is shaped as a second shell comprising said board (23) and adapted to be engaged by said shell (27).

6. Device according to any one of preceding claims, **characterised in that** a control device (14), configured in order to control, through at least one pump, filling of said boiler (68) on the basis of said electrical signals representative of the presence or of the absence of the liquid in the determined level, is associated to said boiler (68).

7. Device according to claim 6, **characterised in that** said board (23) is configured
- to introduce on the basis of said optical signals
- at least one first threshold representative of a change in the determined level from presence of the liquid to absence of the liquid in the duct (61), and
- at least one second threshold representative of a change in the determined level from absence of the liquid to presence of the liquid in the duct (61); and
- to respectively transmit differentiated signals to said control device (14) on the basis of said first threshold and of said second threshold.

8. Device according to any one of preceding claims, **characterised in that** said board (23) is configured for electrically supplying said optical sensor (21) in an intermittent way.

9. Apparatus for controlling the presence of a liquid for infusions comprising
- a boiler unit (16), having at least one boiler (68) and at least one sight duct (61), and
- at least one control device (14) configured in order to control through of at least one pump filling of said at least one boiler (68),
**characterised by** comprising
- at least one device (12) as claimed in the claims 1 to 8.

10. Apparatus according to claim 9 **characterised in that** the board (23) of said device (12) is configured for electrically supplying the optical sensor (21) of the device (12) in intermittent way on the basis of determined characteristic of said control device (14).

11. Method for detecting the presence of liquid in an infusion machine having a boiler (68) and a sight duct (61) of a determined length, comprising the steps of
- determining, through an optical sensor (21) the presence or the absence of the liquid at a determined level of said duct (61) through optical signals;
- managing through a board (23) said optical signals and generating electrical signals representative of the presence or the absence of the liquid in the determined level of said duct (61);
**characterised by** the step of
- engaging to said board (23) a shell (27) opaque to the ambient light and shaped in order protect from the ambient light said optical sensor (21).

12. Method according to claim 11 **characterised in that** said step of engaging said shell (27) comprises
- shaping a support element (221) associated to said board (23) so that it is arranged to
- co-operate with said shell (27) in order to exert one determined pressure on said duct (61), and
- allow a free positioning of said optical sensor (21) along said determined length of said duct (61).

13. Method according to claim 11 or 12 **characterised in that** said step of generating electrical signals comprises
- generating first electrical signals on the basis of at least one first threshold, representative of a change in the determined level from presence of the liquid to absence of the liquid in the duct (61), and
- generating seconds electrical signals on the basis of at least one second threshold, representative of a change in the determined level from absence of the liquid to presence of the liquid in the duct (61).

14. Method according to any one of claims 11 to 13 **characterised by** the further step of
- electrically supplying said optical sensor (21) in an intermittent way.
